# EUROPEAN PATENT APPLICATION

(11) **EP 4 548 736 A1**
(43) Date of publication of application: **07.05.2025**
(21) Application number: 23831010.6
(22) Date of filing: 07.06.2023
(51) Int. Cl.: A01B 69/00

(54) **WORK MACHINE**

(30) Priority: 30.06.2022 JP 2022105611
(71) Applicant: Kubota Corporation, Osaka 556-8601 (JP)
(72) Inventor: KINUGAWA, Ryosuke, Sakai-shi, Osaka 590-0908 (JP); IKEDA, Ryo, Sakai-shi, Osaka 590-0908 (JP); MIURA, Keisuke, Sakai-shi, Osaka 590-0908 (JP); ISHIHARA, Kenji, Sakai-shi, Osaka 590-0908 (JP)
(74) Representative: Cabinet Beau de Loménie
(86) International application number: PCT/JP2023/021272
(87) International publication number: WO 2024/004560

(57) **Abstract**

The present invention provides a working machine capable of suppressing deterioration of working efficiency. A working machine 100 includes: a tractor 1; a battery 6 that stores an energy source for driving the tractor 1; a working device 2 provided in the tractor 1 and that performs work by using a material; a route creation unit 51B that creates a scheduled travel route of the tractor 1 in a work area A2 where the working device 2 performs the work by using the material; an area setting unit 51D that sets a replenishment area A5 in which replenishment with the material and replenishment with the energy source are performed outside the work area A2; and a position setting unit 51C that sets a first replenishment position PH1, which is a position for the replenishment with the material, and a second replenishment position PH2, which is a position for the replenishment with the energy source, in the replenishment area A5 set by the area setting unit 51D. With this configuration, the working machine 100 can reach the first replenishment position PH1 and the second replenishment position PH2 before the material and the battery 6 are used up. Therefore, the material replenishment and the replacement of the battery can be performed at the first replenishment position PH1 and the second replenishment position PH2.

## Description

### TECHNICAL FIELD

The present invention relates to a working machine including, for example, an agricultural machine and a construction machine.

### BACKGROUND ART

Hitherto, an agricultural machine of Patent Literature 1 is known as an agricultural machine including a traveling vehicle body and a working device that performs work using a material. In the agricultural machine of Patent Literature 1, a scheduled travel route of the traveling vehicle body, a replenishment area in which material replenishment is performed, and a material replenishment position in the replenishment area are set. There is disclosed a technology for causing a traveling vehicle body to travel to a set material replenishment position in a case where work is performed by a working device while causing the traveling vehicle body to perform automated driving based on a travel route.

### CITATION LIST

### PATENT LITERATURE

Patent Literature 1: JP 2021-40497 A (claim 1 and the like)

### SUMMARY OF INVENTION

In recent years, a trend of electrification and emission control has accelerated also for the working machine. As a prime mover, for example, a motor or the like may be used. In this case, a battery or the like that supplies electric energy to the prime mover is often used. In general, when stored electric energy of the battery or the like is used up, the traveling vehicle body stops. For this reason, it is necessary to transport a replenishment (replacement) battery or the like to the position of the working machine, which may deteriorate overall working efficiency.

In view of the above demand, an object of the present invention is to provide a working machine capable of suppressing deterioration of working efficiency.

### SOLUTION TO PROBLEM

The technical means of the present invention for solving the technical problem is characterized by the following points. A working machine includes: a traveling vehicle; a storing device that stores an energy source for driving the traveling vehicle; a working device provided in the traveling vehicle and that performs work by using a material; a route creation unit that creates a scheduled travel route of the traveling vehicle in a work area where the working device performs the work by using the material; an area setting unit that sets a replenishment area in which replenishment with the material and replenishment with the energy source are performed outside the work area; and a position setting unit that sets a first replenishment position, which is a position for the replenishment with the material, and a second replenishment position, which is a position for the replenishment with the energy source, in the replenishment area set by the area setting unit.

In the working machine, the route creation unit creates a turning route that passes through the replenishment area from the work area, and returns to the work area again, and the position setting unit sets the first replenishment position and the second replenishment position in a portion corresponding to the turning route in the replenishment area.

In the working machine, the position setting unit sets the first replenishment position and the second replenishment position on turning routes on a same side in a turning direction of the traveling vehicle among a plurality of the turning routes.

In the working machine, the position setting unit sets the second replenishment position based on a remaining level of the energy source in the storing device, and the working machine comprises an automated driving control unit that performs the work by the working device while causing the traveling vehicle to perform automated driving based on the scheduled travel route, the automated driving control unit moving the traveling vehicle to the second replenishment position set by the position setting unit.

In the working machine, the position setting unit sets the first replenishment position based on a remaining amount of the material in the working device, and the working machine comprises an automated driving control unit that performs the work by the working device while causing the traveling vehicle to perform automated driving based on the scheduled travel route, the automated driving control unit moving the traveling vehicle to the first replenishment position set by the position setting unit.

The working machine includes a storing device mounting portion on which the storing device is mounted, wherein in a case where the replenishment with the energy source is performed at the second replenishment position set by the position setting unit, the storing device mounted on the storing device mounting portion is separated, and a new storing device for replacing the separated storing device is mounted on the storing device mounting portion.

### ADVANTAGEOUS EFFECTS OF INVENTION

According to the present invention, it is possible to suppress deterioration of working efficiency.

### BRIEF DESCRIPTION OF DRAWINGS

Fig. 1 is a functional block diagram of a working machine according to an embodiment of the present invention.
Fig. 2 is a perspective view of a lifting device included in the working machine shown in Fig. 1.
Fig. 3 is a view showing an example of a map registration screen displayed on a display device included in the working machine shown in Fig. 1.
Fig. 4 is a diagram for explaining a method of obtaining a contour (farm field map) of a farm field in the working machine shown in Fig. 1.
Fig. 5 is a view showing an example of a work setting screen displayed on the display device included in the working machine shown in Fig. 1.
Fig. 6 is a diagram for explaining setting of a replenishment area in the working machine shown in Fig. 1.
Fig. 7 is a view showing an example of a route setting screen displayed on the display device included in the working machine shown in Fig. 1.
Fig. 8 is a diagram for explaining creation of a unit work section in a work area and creation of a scheduled travel route in the working machine shown in Fig. 1.
Fig. 9 is a diagram for explaining a relationship between a remaining amount of a material and a remaining level of a battery, and a first replenishment position and a second replenishment position to be set in the working machine shown in Fig. 1.
Fig. 10 is a diagram for explaining a relationship between the remaining amount of the material and the remaining level of the battery, and the first replenishment position and the second replenishment position to be set in the working machine shown in Fig. 1.
Fig. 11 is a diagram for explaining a relationship between the remaining amount of the material and the remaining level of the battery, and the first replenishment position and the second replenishment position to be set in the working machine shown in Fig. 1.
Fig. 12 is a diagram showing an example of a driving screen displayed on the display device included in the working machine shown in Fig. 1.
Fig. 13 is a diagram for explaining automated driving of the working machine shown in Fig. 1.
Fig. 14 is a diagram for explaining replacement of the battery in a battery mounting portion in the working machine shown in Fig. 1.
Fig. 15 is an overall side view of the working machine shown in Fig. 1.
Fig. 16 is a diagram for explaining an operation of delivery and collection of the battery between a delivery base and the farm field.

### DESCRIPTION OF EMBODIMENTS

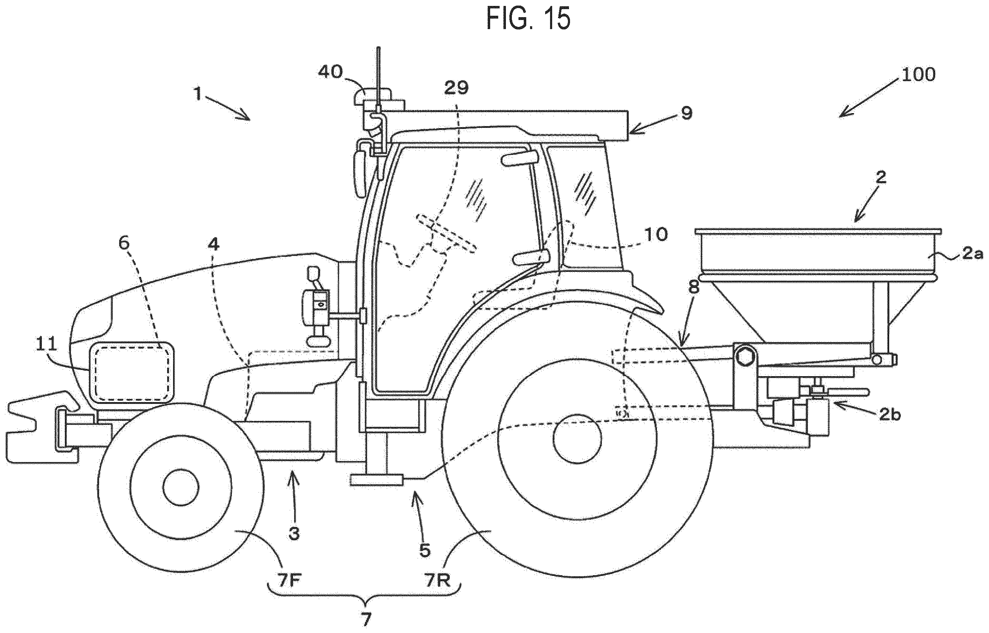

Hereinafter, embodiments of the present invention will be described with reference to the drawings. Fig. 15 shows an overall side view of a working machine 100. The working machine 100 includes a traveling vehicle 1 and a working device 2. In the present embodiment, since the traveling vehicle 1 is a tractor, the traveling vehicle 1 will be described below as a tractor 1. However, the traveling vehicle 1 is not limited to the tractor, and may be an agricultural vehicle such as a combine harvester or a rice transplanter, or may be a construction vehicle or the like.

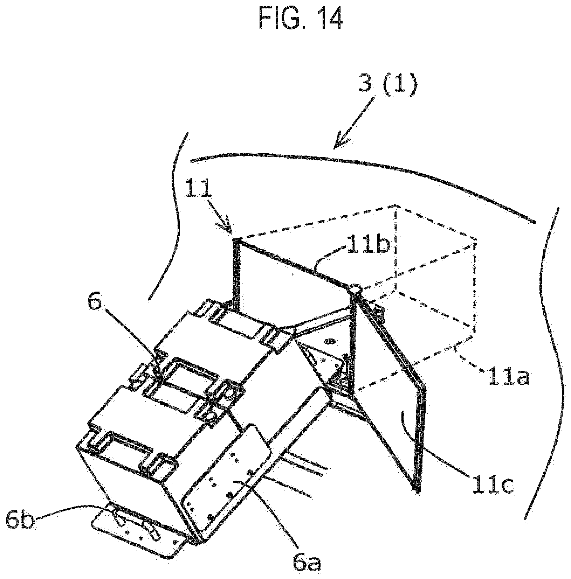

As shown in Fig. 15, the tractor 1 includes a traveling vehicle body 3 including a traveling device 7, a prime mover 4, a transmission device 5, and a battery (storing device) 6. The traveling device 7 is a device including front wheels 7F and rear wheels 7R. The front wheel 7F may be a tire type or a crawler type. The rear wheel 7R may also be a tire type or a crawler type. The prime mover 4 is an electric motor or the like, and is driven by electric energy (energy source) supplied from the battery 6. The prime mover 4 and the battery 6 are disposed at a front portion of the traveling vehicle body 3, and the battery 6 is mounted on a battery mounting portion (storing device mounting portion) 11 included in the traveling vehicle body 3 (see Fig. 14). The battery 6 mounted on the battery mounting portion 11 is replaceable, and details thereof are described below. The battery 6 may be loaded on the working device 2 instead of being mounted on the traveling vehicle body 3. The transmission device 5 can switch a propulsive force of the traveling device 7 by shifting, and can switch forward movement and backward movement of the traveling device 7. A cabin 9 is provided in the traveling vehicle body 3, and a driver seat 10 is provided in the cabin 9.

In addition, a lifting device 8 configured by a three-point link mechanism or the like is provided at a rear portion of the traveling vehicle body 3. The working device 2 is attachable to and detachable from the lifting device 8. The working device 2 can be towed by the traveling vehicle body 3 by being coupled to the lifting device 8. The working device 2 is a device that performs work using a material, and is, for example, a fertilizer spreading device for spreading a fertilizer, a pesticide spreading device for spreading a pesticide, a seedling transplanting device for transplanting a seedling, a seeding device for spreading a seed, or the like. That is, the working device 2 is a device that supplies the material such as a fertilizer, a pesticide, a seedling, or a seed to a farm field.

The working device 2 includes a container (hopper) 2a capable of storing (housing) the material, and a supply mechanism 2b provided in the container 2a and supplying the material in the container 2a. The supply mechanism 2b is, for example, an openable and closable shutter that supplies the material falling from the container 2a to the farm field or stops the supply, a nozzle that spreads the material, a pump that sends the material, or the like. A structure of the working device 2 is not limited to the example described above.

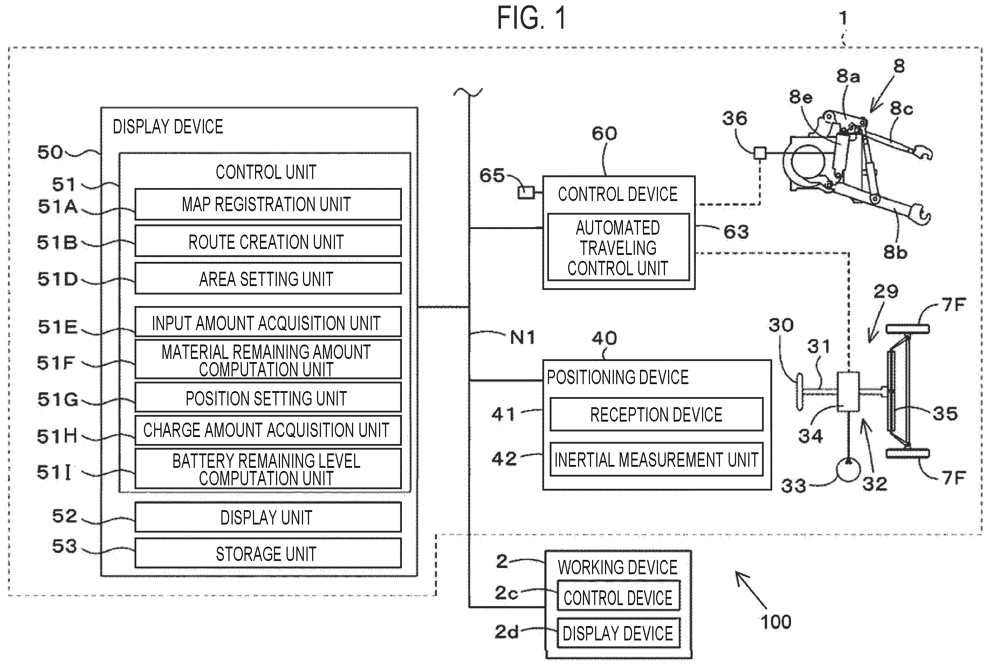

As shown in Fig. 1, the working device 2 includes a control device 2c that controls the supply mechanism 2b and a display device 2d connected to the control device 2c. A supply amount per predetermined area (per unit area) [for example, 10 kg/10a (1000m²)], a supply width of the material (unit: m), an input amount of the material input to the container 2a (unit: kg), and the like can be input to the display device 2d. The control device 2c controls an opening/closing amount (opening degree), an opening/closing timing, and the like of the supply mechanism 2b based on a supply amount, a supply width (work width), and the like. The supply of the material by the working device 2 is preferably based on a vehicle speed, in which a supply amount per unit time is changed in accordance with a movement speed (vehicle speed). In addition, when a switch or the like provided in the display device 2d is operated and the supply of the material starts, the control device 2c outputs a signal (start signal) indicating that the supply has been started to an in-vehicle network N1 described below. When the switch or the like is operated and the supply ends, the control device 2c outputs a signal (end signal) indicating that the supply has ended to the in-vehicle network N1.

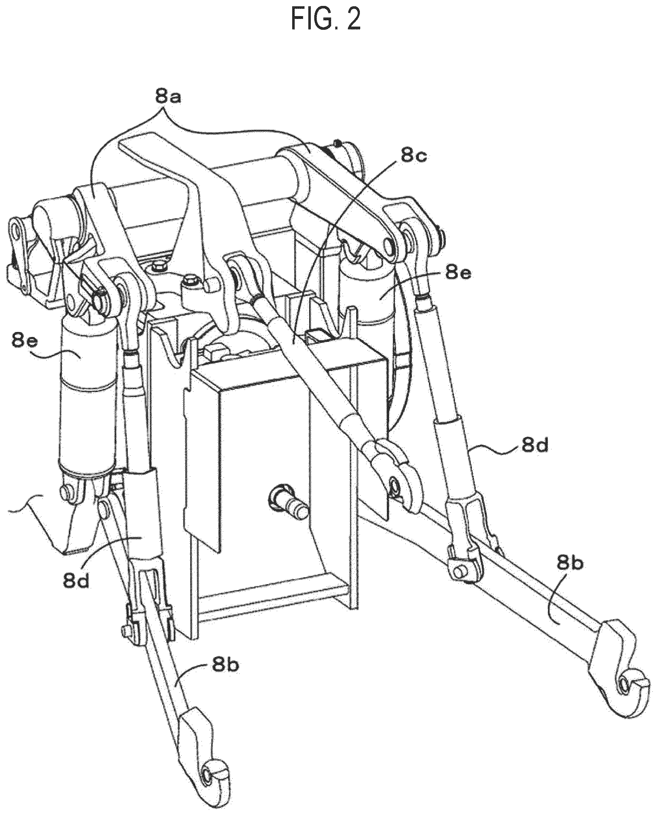

As shown in Fig. 2, the lifting device 8 includes a lift arm 8a, a lower link 8b, a top link 8c, a lift rod 8d, and a lift cylinder 8e. A front end portion of the lift arm 8a is swingably supported upward or downward on a rear upper portion of the case (transmission case) that houses the transmission device 5. The lift arm 8a swings (is lifted and lowered) by driving of the lift cylinder 8e. The lift cylinder 8e is configured by a hydraulic cylinder. The lift cylinder 8e is connected to a hydraulic pump via a control valve 36 (see Fig. 1). The control valve 36 is a solenoid valve or the like, and expands and contracts the lift cylinder 8e.

A front end portion of the lower link 8b is swingably supported upward or downward on a rear lower portion of the transmission device 5. A front end portion of the top link 8c is swingably supported upward or downward on a rear portion of the transmission device 5 above the lower link 8b. The lift rod 8d couples the lift arm 8a and the lower link 8b. The working device 2 is coupled to a rear portion of the lower link 8b and a rear portion of the top link 8c. When the lift cylinder 8e is driven (expanded and contracted), the lift arm 8a is lifted and lowered, and the lower link 8b coupled to the lift arm 8a via the lift rod 8d is lifted and lowered. As a result, the working device 2 swings upward or downward (is lifted or lowered) with a front portion of the lower link 8b as a fulcrum.

As shown in Fig. 1, the tractor 1 includes a steering device 29. The steering device 29 includes a steering wheel 30, a rotation shaft (steering shaft) 31 that rotates with the rotation of the steering wheel 30, and an assist mechanism (power steering mechanism) 32 that assists the steering of the steering wheel 30. The assist mechanism 32 includes a hydraulic pump 33, a control valve 34 to which hydraulic oil discharged from the hydraulic pump 33 is supplied, and a steering cylinder 35 operated by the control valve 34. The control valve 34 is a solenoid valve that operates based on a control signal. The control valve 34 is, for example, a three-position switching valve that can be switched by movement of a spool or the like. The control valve 34 can also be switched by steering of the steering shaft 31. The steering cylinder 35 is connected to an arm (knuckle arm) that changes an orientation of the front wheel 7F.

Therefore, when the steering wheel 30 is operated, a switching position and an opening degree of the control valve 34 are switched according to the steering wheel 30, and a steering direction of the front wheel 7F can be changed by expanding and contracting the steering cylinder 35 to the left or right according to the switching position and the opening degree of the control valve 34. Note that the steering device 29 described above is an example, and is not limited to the above-described configuration.

As shown in Fig. 1, the tractor 1 includes a positioning device 40. The positioning device 40 can detect its own position (positioning information including latitude and longitude) by a satellite positioning system (positioning satellite) such as D-GPS, GPS, GLONASS, BeiDou, Galileo, or Michibiki. That is, the positioning device 40 receives a satellite signal (a position of the positioning satellite, a transmission time, correction information, or the like) transmitted from the positioning satellite, and detects a position (for example, latitude and longitude) of the tractor 1, that is, a vehicle body position, based on the satellite signal. The positioning device 40 includes a reception device 41 and an inertial measurement unit (IMU) 42.

The reception device 41 is a device that includes an antenna or the like and receives the satellite signal transmitted from the positioning satellite, and is attached to the traveling vehicle body 3 separately from the inertial measurement unit 42. In the embodiment, the reception device 41 is attached to the traveling vehicle body 3, that is, the cabin 9. Note that an attachment location of the reception device 41 is not limited to that in the embodiment. The inertial measurement unit 42 includes an acceleration sensor that detects an acceleration, a gyro sensor that detects an angular velocity, and the like. The inertial measurement unit 42 is provided below the traveling vehicle body 3, for example, the driver seat 10, and can detect a roll angle, a pitch angle, a yaw angle, and the like of the traveling vehicle body 3.

As shown in Fig. 1, the tractor 1 includes a display device 50. The display device 50 includes a control unit 51, a display unit 52, and a storage unit 53. The control unit 51 is configured by a central processing unit (CPU), an electric/electronic circuit, or the like, and performs various controls related to the display device 50. The display unit 52 is configured by a liquid crystal panel, a touch panel, other panels, and the like, and displays various information. The storage unit 53 is configured by a nonvolatile memory or the like. The storage unit 53 stores, for example, an application program for supporting the work of the tractor 1, and when the application program is activated, the display device 50 operates as a work support device that supports the work. Even in a case where the display device 50 operates as the work support device, processing as the work support device is performed by the control unit 51 as hardware.

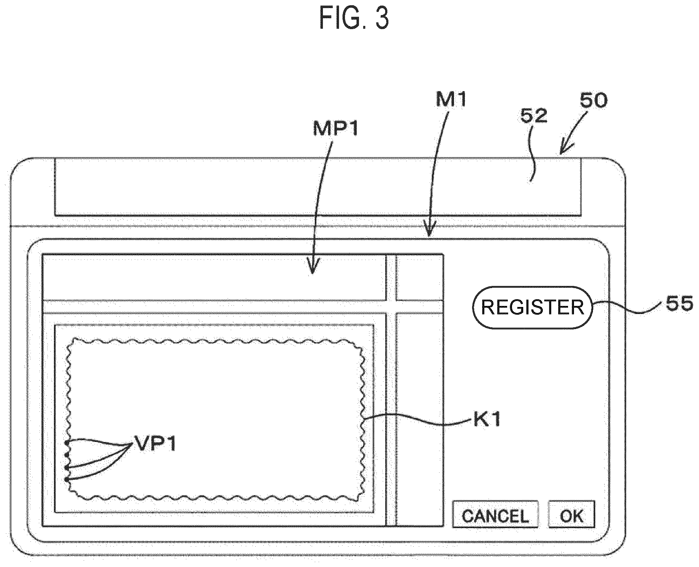

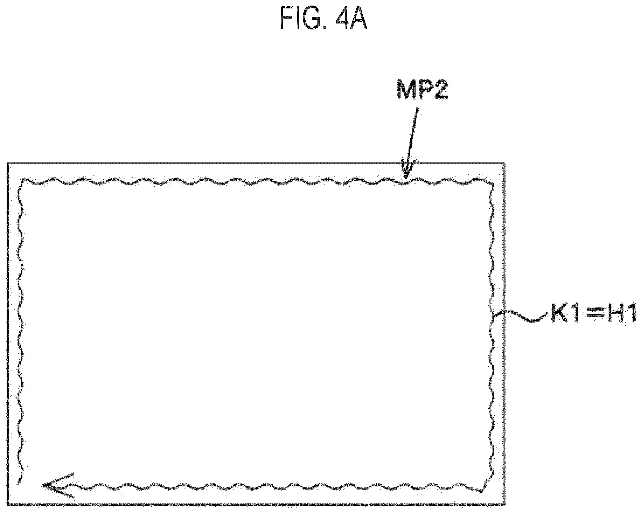

As shown in Fig. 1, the display device 50 includes a map registration unit 51A. The map registration unit 51A registers a contour of a predetermined farm field, for example, a position corresponding to the contour of the predetermined farm field. As shown in Fig. 3, when a predetermined operation is performed on the display device 50, a map registration screen M1 is displayed on the display unit 52 by the map registration unit 51A. The map registration screen M1 displays farm field identification information such as a map MP1 including the farm field, a vehicle body position VP1 of the tractor 1, a farm field name, and a farm field management number. In addition to image data indicating the farm field, position information such as latitude and longitude is associated with the map MP1. When the tractor 1 enters the farm field and goes around in the farm field, the current vehicle body position VP1 detected by the positioning device 40 when the tractor 1 goes around is displayed on the map registration screen M1. When the tractor 1 finishes going around in the farm field and a register button 55 displayed on the map registration screen M1 is selected, as shown in Fig. 4(a), the map registration unit 51A sets a traveling track K1 obtained by a plurality of vehicle body positions when the tractor 1 goes around as a contour (outer shape) H1 of the farm field, and registers a farm field map MP2 represented by the contour H1 together with the farm field identification information.

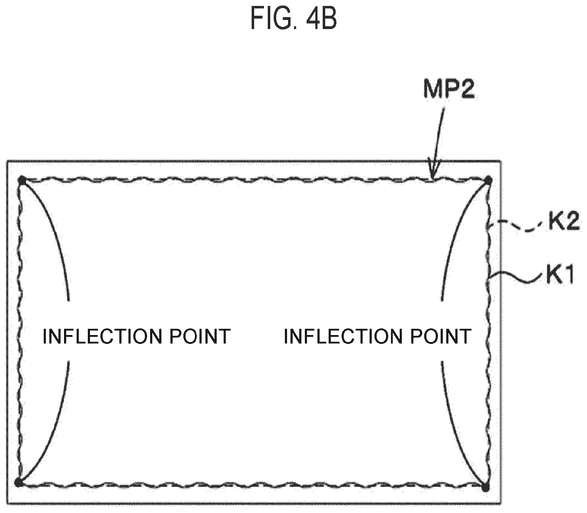

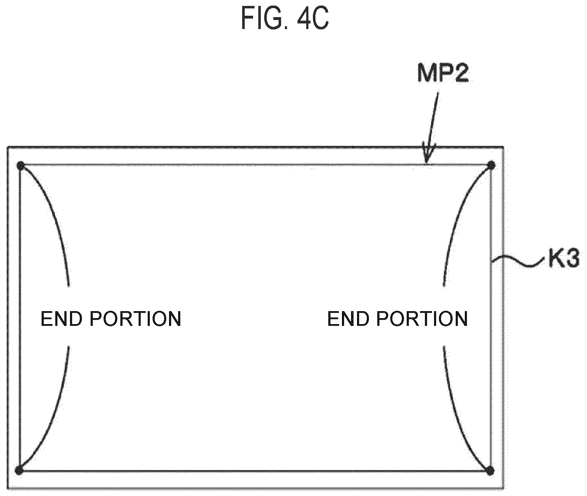

As shown in Fig. 4(b), the map registration unit 51A may compute an inflection point from the traveling track indicated by the vehicle body position VP1 and register a contour K2 connecting the inflection points as the contour H1 (farm field map MP2) of the farm field, or as shown in Fig. 4(c), when the tractor 1 goes around, a driver or the like may designate an end portion of the farm field by a switch or the like provided in the tractor 1 and register a contour K3 connecting the designated end portion as the contour H1 (farm field map MP2). The farm field registration method described above is an example, and is not limited. The contour of the farm field, that is, the farm field map MP2, may be data indicated by a position (latitude and longitude), data indicated by coordinates (X axis and Y axis) system, or data indicated by other expressions.

The storage unit 53 stores the farm field map MP2 indicating the contour (outer shape) registered by the map registration unit 51A. That is, the storage unit 53 stores the farm field map MP2 and data indicating the contour of the farm field (data for representing the predetermined farm field). As shown in Fig. 1, the display device 50 includes an area setting unit 51D. The area setting unit 51D sets a work area A2 and a replenishment area A5. In a case where the work area A2 has already been set in the farm field map MP2, the area setting unit 51D may set only the replenishment area A5. In the embodiment, an example in which both the work area A2 and the replenishment area A5 are set will be described.

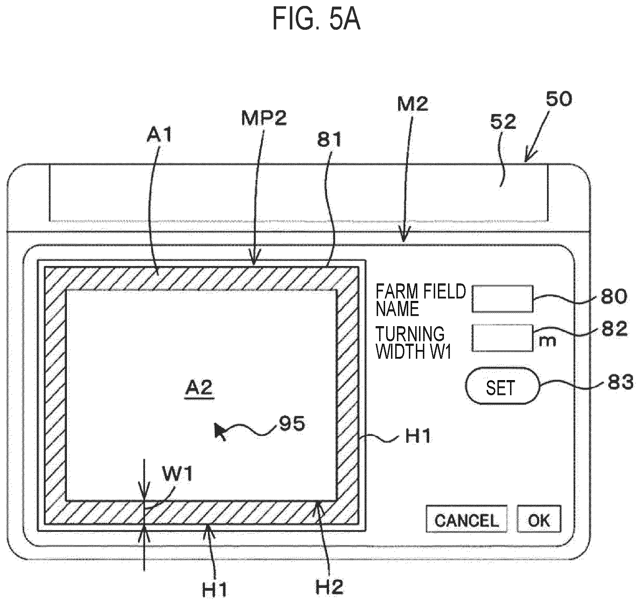

As shown in Fig. 5(a), when a worker (driver) performs a predetermined operation on the display device 50, the area setting unit 51D displays a work setting screen M2 on the display unit 52. The work setting screen M2 includes a farm field input section 80 and a farm field display section 81. The farm field input section 80 can input the farm field identification information such as the farm field name and the farm field management number. The farm field display section 81 displays the farm field map MP2 indicating the predetermined farm field corresponding to the farm field identification information input to the farm field input section 80. That is, the area setting unit 51D requests the storage unit 53 for the farm field map MP2 corresponding to the farm field identification information input to the farm field input section 80, and causes the farm field display section 81 to display the farm field map MP2 transmitted from the storage unit 53.

When a turning setting button 83 is selected after a turning width W1 is input to a turning width input section 82 on the work setting screen M2, the area setting unit 51D displays the work area A2 excluding a turning area A1 on the farm field map MP2 displayed on the farm field display section 81. For example, the area setting unit 51D sets, as the work area A2, an area surrounded by a contour H2 formed by offsetting the contour H1 of the farm field map MP2 inward by the turning width W1. In the work setting screen M2, the work area A2 may be set in the farm field map MP2 by designating a position of the contour of the work area A2 on the farm field map MP2 displayed in the farm field display section 81 using a pointer or the like.

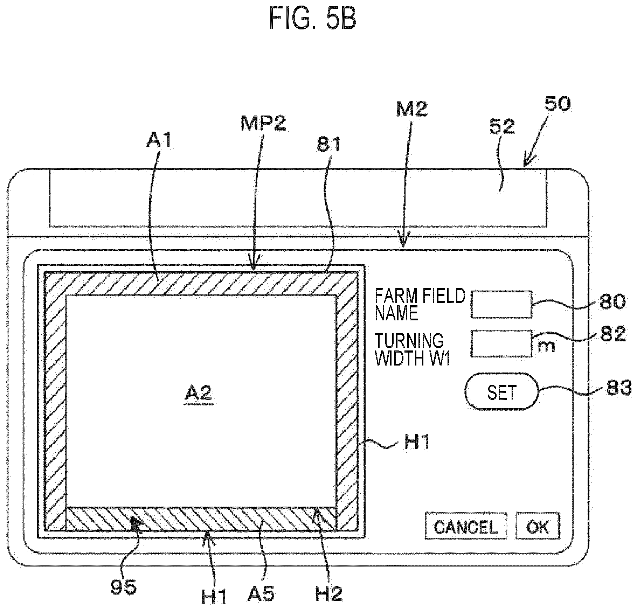

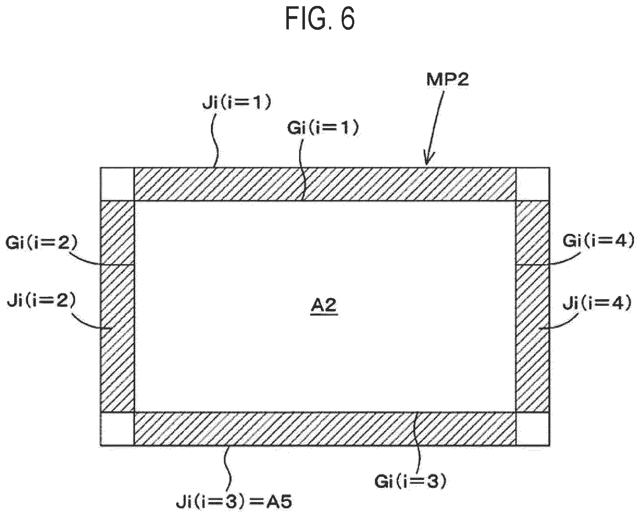

After setting the work area A2, the area setting unit 51D proceeds to processing of the replenishment area A5. The area setting unit 51D performs setting by, for example, a pointer section 95 displayed on the work setting screen M2. In a case where an area outside the work area A2 (external area), that is, the turning area A1, is selected by the pointer section 95, the selected turning area A1 is set as the replenishment area A5. Specifically, as shown in Fig. 6, it is assumed that the work area A2 has a plurality of sides Gi (i = 1, 2, 3, 4, ... and i), and the turning area A1 is divided into a plurality of areas Ji (i = 1, 2, 3, 4, ..., and i) that are in contact with the plurality of sides Gi. In this case, the area Ji selected by the pointer section 95 among the plurality of areas Ji is set as the replenishment area A5. For example, in a case where the work area A2 includes four sides G1, G2, G3, and G4, the turning area A1 includes four areas J1, J2, J3, and J4. Here, in a case where the area J3 is selected from among the four areas J1, J2, J3, and J4, the area setting unit 51D sets the area J3 as the replenishment area A5, and the replenishment area A5 set outside the work area A2 is displayed on the work setting screen M2 as shown in Fig. 5B. In this manner, the replenishment area A5 can be set outside the work area A2, for example, in the area Ji that is in contact with an agricultural road according to a shape of the farm field, that is, a shape of the work area A2.

The storage unit 53 stores data of the farm field map MP2 in which the work area A2 and the replenishment area A5 are set (data indicating a position of the work area A2 and data indicating the replenishment area A5).

As shown in Fig. 1, the display device 50 includes a route creation unit 51B. The route creation unit 51B creates a travel route (scheduled travel route) L1 of the traveling vehicle body 3 on the farm field map MP2 by referring to the farm field map MP2 registered in the storage unit 53.

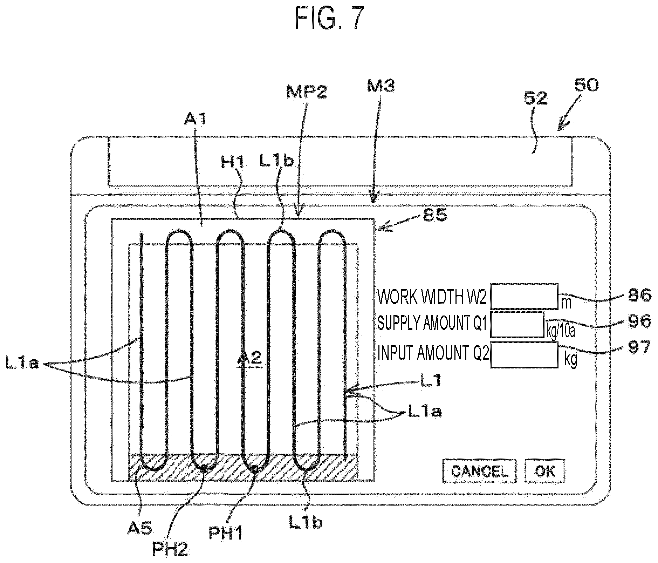

As shown in Fig. 7, when the worker (driver) performs a predetermined operation on the display device 50, the route creation unit 51B displays a route setting screen M3 on the display unit 52. In the route setting screen M3, the scheduled travel route L1 can be set at least in the work area A2 in the farm field. The route setting screen M3 includes a route display section 85 in which the scheduled travel route L1 is displayed and a width input section 86. A work width W2 of the working device 2 is a width (work execution width) at which the working device 2 performs the work on a ground such as the farm field, and is a spreading width for supplying the material in a case of the working device 2 that spreads the material in the farm field. For example, in a case where the working device 2 is a fertilizing device, a fertilization width is the work width W2. In a case where the working device 2 is a chemical spreading device, a chemical spreading width is the work width W2. In a case where the working device 2 is the seedling transplanting device, a planting width at which a seedling can be planted in the farm field in one work is the work width. In a case where the working device 2 is the seeding device, a seeding width is the work width W2. Ground work refers to agricultural work performed on the farm field and crops planted in the farm field, and examples of the ground work include planting of seedlings, watering, spreading of chemicals, spreading of fertilizers (fertilization), spreading of seeds (seeding), compaction, covering, ridge formation, tilling, and groove forming.

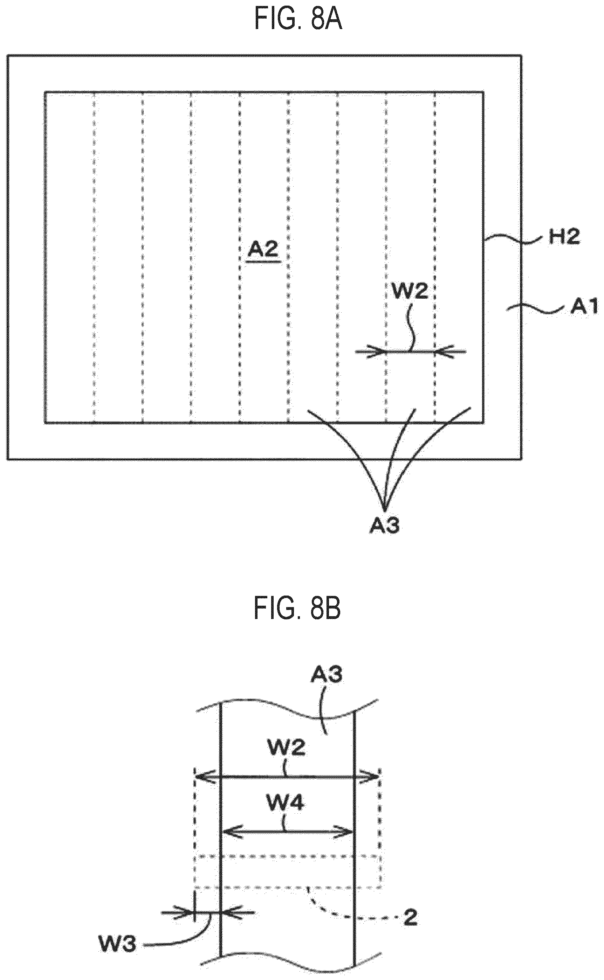

When the work width W2 is acquired, the route creation unit 51B divides the work area A2 in a longitudinal direction or a lateral direction with the work width W2 as shown in Fig. 8(a), thereby creating, in the work area A2, a plurality of unit work sections A3 in which the working device 2 performs the work. That is, the route creation unit 51B creates the plurality of unit work sections A3 having the same width as the work width W2 in the work area A2. As shown in Fig. 8(b), the route creation unit 51B may create the plurality of unit work sections A3 having a width W4 obtained by excluding an overlap width W3 from the work width W2 in the work area A2. The overlap width W3 can be input on the route setting screen M3. That is, in a case where the traveling vehicle body 3 to which the working device 2 is coupled is caused to travel, the route creation unit 51B sets, as the unit work section A3, a region of a minimum unit in which the work is performed on the farm field by the working device 2.

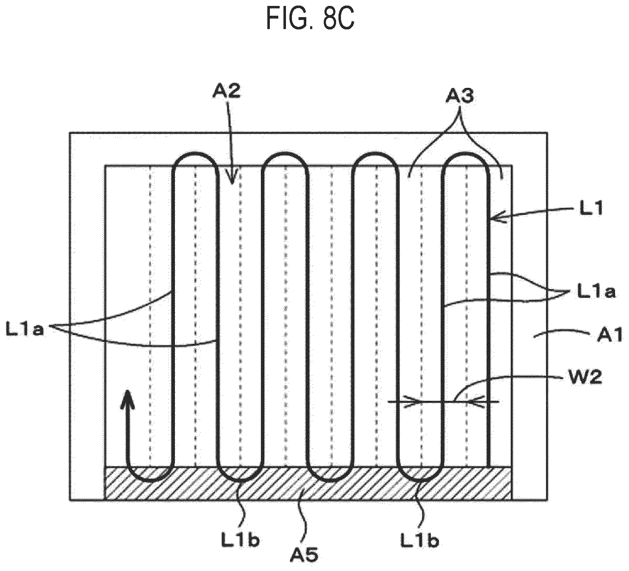

As shown in Fig. 8(c), the route creation unit 51B creates a straight part (straight route) L1a through which the traveling vehicle body 3 goes straight for each unit work section A3 of the farm field map MP2. That is, the route creation unit 51B creates, for example, the linear straight route L1a connecting both end portions of the unit work section A3 in a longitudinal direction at a central portion of the unit work section A3 in a width direction. The route creation unit 51B creates a route passing through the replenishment area A5, that is, a route that can connect the adjacent straight routes L1a in the replenishment area A5. That is, the route creation unit 51B creates a turning route L1b such that the turning part (turning route) L1b where the traveling vehicle body 3 turns is located in the replenishment area A5. That is, the route creation unit 51B creates a part of the scheduled travel route L1 for automated driving in the replenishment area A5 set outside the work area A2.

The route creation unit 51B can associate the scheduled travel route L1 with the vehicle speed (movement speed) of the tractor 1 (traveling vehicle body 3). For example, it is assumed that a vehicle speed input section for inputting the vehicle speed is provided in the route setting screen M3, and the vehicle speed is input to the vehicle speed input section. The route creation unit 51B associates the straight route L1a with the vehicle speed input to the vehicle speed input section. The scheduled travel route L1 (the straight route L1a and the turning route L1b) created by the route creation unit 51B is stored in the storage unit 53.

### <Battery Replacement and Battery Delivery/Collection>

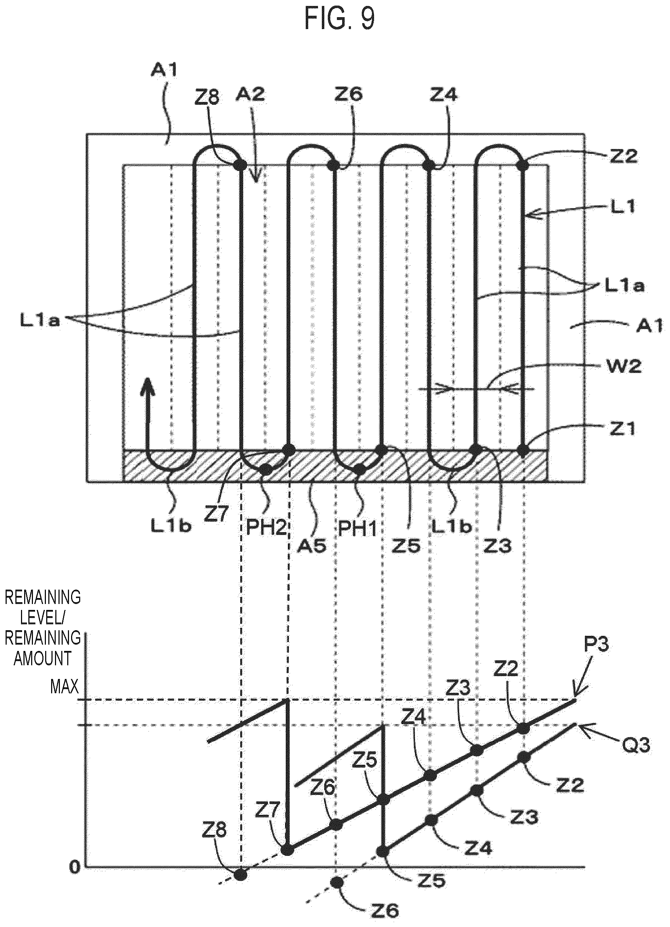

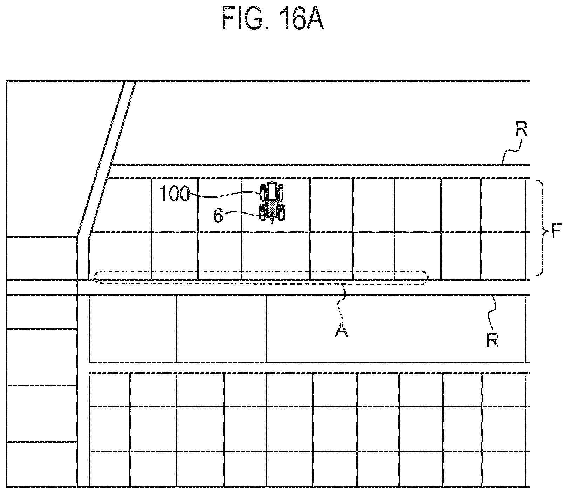

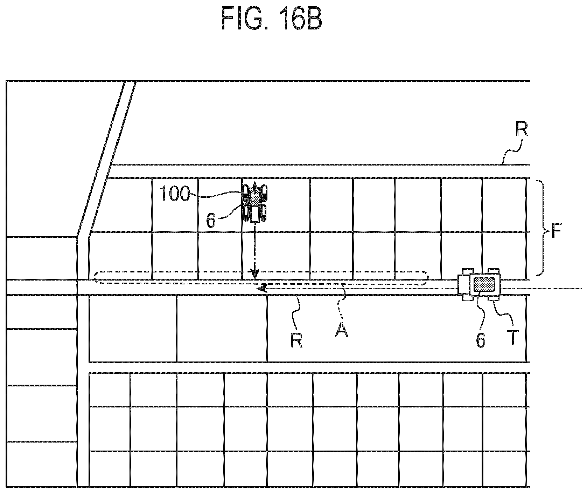

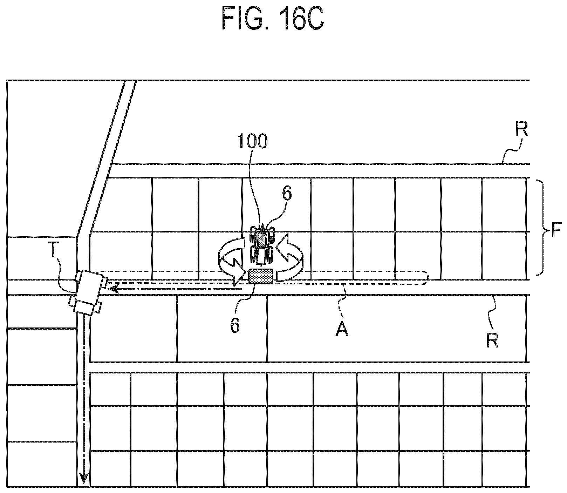

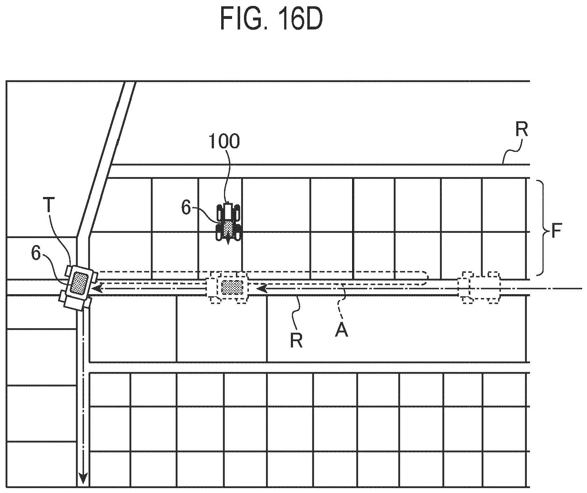

In general, when stored electric energy of the battery is used up, the traveling vehicle body stops. For this reason, it is necessary to transport a replenishment (replacement) battery to the position of the working machine, which may deteriorate overall working efficiency. In the present embodiment, as described above, since the prime mover 4 is driven by the battery 6, a remaining level of the battery 6 being mounted decreases as the work in the farm field progresses (see Fig. 9 and the like). In order to suppress deterioration of the working efficiency, the replacement of the battery 6 is preferably performed at an appropriate place and timing. On the other hand, since the material in the working device also tends to be similar, the material replenishment is performed in the replenishment area A5 outside the work area A2 (see Fig. 9 and the like). For example, as shown in Fig. 16, the material replenishment may be performed in an area A that is outside a work area of a farm field F and is in contact with an agricultural road R. The area A corresponds to the replenishment area A5. In this case, the area A can also be used as an area for replacement of the battery 6.

In the farm field F, delivery of the replenishment (replacement) battery 6 and collection of the used battery 6 are performed as follows so that the replacement of the battery 6 in the "area A that is in contact with the agricultural road R" can be implemented. In the present embodiment, it is assumed that the battery 6 that is not mounted is stored in a delivery base (delivery center) away from the farm field F. In the delivery base, it is possible to store the replacement battery 6 to be delivered toward the farm field F, or to charge the used battery 6 collected in the farm field F. The delivery of the replacement battery 6 and the collection of the used battery 6 are performed by a transport vehicle such as a truck that can be loaded with and transport the battery 6. The replacement battery 6 is a battery that is sufficiently charged, for example, a battery whose charge amount is 80% or more in a case where the maximum charge amount of the battery is 100%. Note that the charge amount is not limited to 80% or more.

In a case of delivering the replacement battery 6 to the farm field F, for example, the replacement battery 6 stored in the delivery base is loaded on a transport vehicle T, and as shown in Fig. 16(a), the transport vehicle T travels from the delivery base toward the farm field F and reaches the area A of the farm field F that is in contact with the agricultural road R. Then, as shown in Fig. 16(b), in the area A (for example, the area for material replenishment), the battery 6 loaded on the transport vehicle T is unloaded as the replacement battery 6. On the other hand, as shown in Fig. 16(c), the battery 6 separated from the working machine 100 is left as the used battery 6 in the area A, and the replacement battery 6 that has already been left is mounted on the working machine 100. Note that the transport vehicle T after unloading moves to another farm field and collects another battery, and then returns to the delivery base.

In a case of collecting the used battery 6 from the area A, as shown in Fig. 16(d), the used battery 6 that has been left is loaded on the transport vehicle T that has reached the area A via the agricultural road R, and the transport vehicle T travels toward the delivery base. The unloading of the battery 6 from the transport vehicle T and the loading of the battery 6 on the transport vehicle T may be performed by a driver of the transport vehicle T. The separation of the mounted battery 6 from the working machine 100 and the mounting of the replacement battery 6 on the working machine 100 may be performed by the driver of the tractor, or may be performed by the driver of the transport vehicle T as a service of the delivery base.

In order to enable the delivery of the battery 6 and the collection of the battery 6 described above, a computer is installed in the delivery base (delivery center). The computer and a communication device (not shown) of the working machine (tractor) 100 can communicate with each other via a network or the like. The computer of the delivery base (delivery center) acquires various information (hereinafter, referred to as delivery information) regarding delivery, and controls various equipment and devices installed in the delivery base (delivery center) based on the acquired delivery information. The delivery information includes an instruction signal (request signal) for requesting delivery of the battery 6, an instruction signal (collection signal) for requesting collection of the battery 6, the vehicle body position of the working machine (tractor) 100, and the like. The request signal, the collection signal, and the vehicle body position are transmitted from the communication device of the working machine (tractor) 100, for example, and are received (acquired) by the computer of the delivery base (delivery center) .

More specifically, during operation of the working machine 100, when the control device 60 determines that the remaining level of the battery 6 being mounted is lower than a predetermined value and replacement of the battery 6 being mounted is necessary, the control device 60 instructs the communication device to transmit the request signal and the vehicle body position, and the communication device transmits the request signal and a vehicle body signal to the computer (delivery base). The computer in the delivery base that has received the request signal and the vehicle body position displays information indicating that "there is a battery delivery request" and the vehicle body position on a monitor or the like of the computer. At the delivery base, an operator confirms the above displayed information, and instructs a delivery driver to move toward the farm field corresponding to the vehicle body position and deliver the battery 6.

Further, in a case where the control device 60 determines that the remaining level is restored by mounting of the battery 6 and the mounted battery 6 is replaced with the replacement battery 6 after a potential temporarily becomes zero by the separation of the battery 6 while the working machine 100 is stopped, the control device 60 instructs the communication device to transmit the collection signal and the vehicle body position, and the communication device transmits the collection signal and the vehicle body signal to the computer (delivery base). The computer in the delivery base that has received the collection signal and the vehicle body position displays information indicating that "there is a battery collection request" and the vehicle body position on the monitor or the like of the computer. At the delivery base, the operator confirms the above displayed information, and instructs the delivery driver to move toward the farm field corresponding to the vehicle body position and collect the used battery 6.

Further, in the case where an automated driving mode is set, the tractor 1 moves to the replenishment area A5 where a replenishment position described below is set by automated driving in a case where the control device 60 determines that replacement of the battery 6 being mounted is necessary. The replenishment area A5 is set to correspond to the area A of the farm field F that is in contact with the agricultural road R. Therefore, when replacing the battery 6, the tractor 1 moves to the area A by the automated driving.

### <Setting of Replenishment Position>

As described above, the replacement battery 6 is delivered to the area A that is outside the work area of the farm field F and is in contact with the agricultural road R. The replacement of the battery is performed in the area A, and the used battery 6 is collected. Therefore, in the present embodiment, a first replenishment position PH1, which is a position for the material replenishment, and a second replenishment position PH2, which is a position for the replacement of the battery 6 (energy source replenishment), are set in the replenishment area A5 outside the work area A2. The tractor 1 is moved by the automated driving to the set first replenishment position PH1 and second replenishment position PH2. The first replenishment position PH1 is set based on the remaining amount of the material in the working device 2. The second replenishment position PH2 is set based on the remaining level of the electric energy in the battery 6. The setting of the first replenishment position PH1 and the second replenishment position PH2 will be described below.

As shown in Fig. 7, the route setting screen M3 displays a supply input section 96 for inputting a supply amount Q1 of the material supplied to the farm field, and an input amount input section 97 for inputting an input amount Q2 of the material input to the working device 2. The display device 50 can obtain a remaining amount (theoretical remaining amount) Q3 of the material at a predetermined position in the farm field based on the supply amount Q1 and the input amount Q2 input to the supply input section 96.

As shown in Fig. 1, the display device 50 includes an input amount acquisition unit 51E and a material remaining amount computation unit 51F. The input amount acquisition unit 51E acquires the input amount of the material loaded on the working device 2. For example, the input amount Q2 input to the input amount acquisition unit 51E is acquired before the start of the work, after the material replenishment, or the like.

The material remaining amount computation unit 51F computes the remaining amount Q3 (unit: kg) of the material at the predetermined position based on the input amount Q2 (unit: kg) acquired by the input amount acquisition unit 51E and a material consumption amount Q4 (unit: kg) for the work. For example, the material remaining amount computation unit 51F obtains an area (working area) covered by the work by multiplying a traveling distance in a case where the working device 2 travels on the straight route L1a by the work width (supply width) W2, and obtains the material consumption amount Q4 at the predetermined position (an amount of the material input to the working device 2 and supplied to the farm field after the work is started by the working device 2) by using the working area and a supply amount per unit area. The material remaining amount computation unit 51F obtains the remaining amount Q3 (unit: kg) of the material at the predetermined position on the straight route L1a by subtracting the material consumption amount Q4 (unit: kg) from the input amount Q2 (unit: kg) of the material input to the container 2a. Note that the method of computing the remaining amount Q3 described above is an example and is not limited. The material remaining amount computation unit 51F may obtain the material consumption amount Q4 by multiplying the supply amount Q1 per unit time supplied to the farm field by a time for which the tractor 1 moves straight on the straight route L1a, and obtain the remaining amount Q3 of the material at the predetermined position on the straight route L1a by subtracting the material consumption amount Q4 from the input amount Q2, or may obtain the remaining amount Q3 of the material by another method.

In addition, the remaining level (theoretical remaining level) P3 of the battery 6 at the predetermined position in the farm field can be obtained based on a charge amount P1 of the battery 6 at the start of traveling and a battery consumption amount P2.

As shown in Fig. 1, the display device 50 includes a charge amount acquisition unit 51H and a battery remaining level computation unit 51I. The charge amount acquisition unit 51H acquires the charge amount of the battery 6 mounted on the traveling vehicle body 3. For example, after mounting the battery 6 on the battery mounting portion 11, the charge amount P1 is acquired based on a potential detected by a potential sensor or the like of the battery 6.

The battery remaining level computation unit 51I computes the remaining level P3 (unit: kJ) of the battery 6 at the predetermined position based on the charge amount P1 (unit: kJ) acquired by the charge amount acquisition unit 51H and the battery consumption amount P2 (unit: kJ) for traveling. For example, the battery remaining level computation unit 51I obtains the battery consumption amount P2 at the predetermined position (a consumption amount after the battery 6 is mounted on the traveling vehicle body 3 and the traveling vehicle body 3 starts traveling) by multiplying the traveling distance in a case where the traveling vehicle body 3 travels on the straight route L1a by a work load per unit distance. The load may be computed based on, for example, a rotation speed of the prime mover 4, the vehicle speed of the traveling vehicle body 3, and the like. The battery remaining level computation unit 51I obtains the remaining level P3 (unit: kJ) of the battery 6 at the predetermined position on the straight route L1a by subtracting the battery consumption amount P2 (unit: kJ) from the charge amount P1 (unit: kJ) of the battery 6 mounted on the traveling vehicle body 3. Note that the method of computing the remaining level P3 described above is an example and is not limited. The battery remaining level computation unit 51I may obtain the battery consumption amount P2 by multiplying the working area described above by the work load per unit area, and obtain the remaining level P3 of the battery 6 at the predetermined position on the straight route L1a by subtracting the battery consumption amount P2 from the charge amount P1, or may obtain the remaining level P3 of the battery 6 by another method.

As shown in Fig. 1, the display device 50 includes a position setting unit 51G. The position setting unit 51G sets the first replenishment position PH1 in the replenishment area A5 based on the computed remaining amount Q3 of the material, and sets the second replenishment position PH2 in the replenishment area A5 based on the computed remaining level P3 of the battery 6. The position setting unit 51G sets the first replenishment position PH1 in the replenishment area A5 such that the remaining amount of the material does not become zero before the working device 2 reaches the replenishment area A5 and sets the second replenishment position PH2 in the replenishment area A5 such that the remaining level of the battery 6 does not become zero before the tractor 1 reaches the replenishment area A5 in a state in which the working device 2 is coupled to the tractor 1 and supplies the material while traveling on the straight route L1a.

A specific setting aspect of the setting of the first replenishment position PH1 and the second replenishment position PH2 will be described with reference to Figs. 9, 10, and 11. First, a case where a relationship between end portion positions Z1 to Z8 on the straight route L1a and the remaining amounts of the material and the remaining levels of the battery 6 corresponding to the end portion positions Z1 to Z8 is in a state shown in Fig. 9 will be described. In this case, since the remaining amount of the material is not zero at the end portion position Z3 adjacent to the replenishment area A5, the first replenishment position PH1 does not have to be set in the turning route L1b following the end portion position Z3. On the other hand, the remaining amount of the material is small at the end portion position Z5, and in a case where the material replenishment is not performed at the end portion position Z5, the remaining amount of the material becomes zero on the way to the end portion position Z6 on an opposite side of the replenishment area A5 as indicated by a virtual line. Since the remaining level of the battery 6 is not zero at the end portion positions Z3 and Z5, the second replenishment position PH2 does not have to be set in the turning route L1b following the end portion positions Z3 and Z5. On the other hand, the remaining level of the battery 6 is low at the end portion position Z7, and in a case where the battery 6 is not replaced at the end portion position Z7, the remaining level of the battery 6 becomes zero on the way to the end portion position Z8 on the opposite side of the replenishment area A5 as indicated by a virtual line.

Therefore, the position setting unit 51G sets the first replenishment position PH1 in at least the turning route L1b following the end portion position Z5, and sets the second replenishment position PH2 in the turning route L1b following the end portion position Z7. Examples of the state as shown in Fig. 9 include a case where an initial charge amount of the battery 6 is relatively large, a case where the battery consumption amount is relatively small, a case where the input amount of the material is relatively small, and a case where the material consumption amount is relatively large.

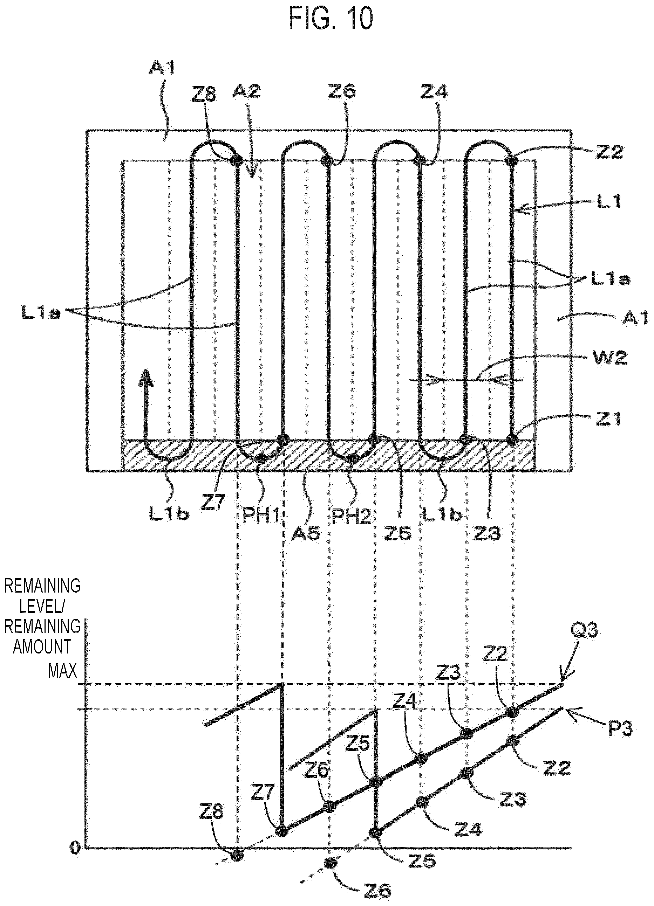

Next, a case where a relationship between the end portion positions Z1 to Z8 on the straight route L1a and the remaining amounts of the material and the remaining levels of the battery 6 corresponding to the end portion positions Z1 to Z8 is in a state shown in Fig. 10 will be described. In this case, since the remaining amount of the material is not zero at the end portion positions Z3 and Z5, the first replenishment position PH1 does not have to be set in the turning route L1b following the end portion positions Z3 and Z5. On the other hand, the remaining amount of the material is small at the end portion position Z7, and in a case where the material replenishment is not performed at the end portion position Z7, the remaining amount of the material becomes zero on the way to the end portion position Z8 on an opposite side of the replenishment area A5 as indicated by a virtual line. In this case, since the remaining level of the battery 6 is not zero at the end portion position Z3 adjacent to the replenishment area A5, the second replenishment position PH2 does not have to be set in the turning route L1b following the end portion position Z3. On the other hand, the remaining level of the battery 6 is low at the end portion position Z5, and in a case where the battery 6 is not replaced at the end portion position Z5, the remaining level of the battery 6 becomes zero on the way to the end portion position Z6 on the opposite side of the replenishment area A5 as indicated by a virtual line.

Therefore, the position setting unit 51G sets the first replenishment position PH1 in at least the turning route L1b following the end portion position Z7, and sets the second replenishment position PH2 in the turning route L1b following the end portion position Z5. Examples of the state as shown in Fig. 10 include a case where the initial charge amount of the battery 6 is relatively small, a case where the battery consumption amount is relatively large, a case where the input amount of the material is relatively large, and a case where the material consumption amount is relatively small.

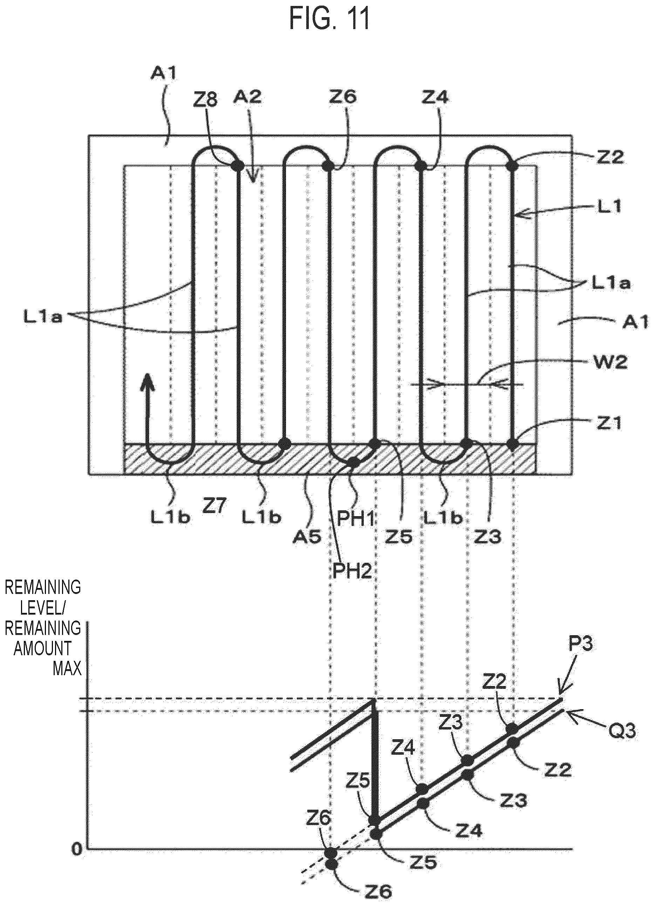

Next, a case where a relationship between the end portion positions Z1 to Z8 on the straight route L1a and the remaining amounts of the material and the remaining levels of the battery 6 corresponding to the end portion positions Z1 to Z8 is in a state shown in Fig. 11 will be described. In this case, since both the remaining amount of the material and the remaining level of the battery 6 are not zero at the end portion position Z3 adjacent to the replenishment area A5, the first replenishment position PH1 and the second replenishment position PH2 do not have to be set in the turning route L1b following the end portion position Z3. On the other hand, both the remaining amount of the material and the remaining level of the battery 6 are low and small at the end portion position Z5, and in a case where the material replenishment is not performed and the battery 6 is not replaced at the end portion position Z5, each of the remaining amount of the material and the remaining level of the battery 6 becomes zero on the way to the end portion position Z6 on the opposite side of the replenishment area A5 as indicated by a virtual line.

Therefore, the position setting unit 51G sets each of the first replenishment position PH1 and the second replenishment position PH2 in at least the turning route L1b following the end portion position Z5. Examples of the state as shown in Fig. 11 include a case where the initial charge amount of the battery 6 is intermediate between the states in Figs. 9 and 10, a case where the battery consumption amount has a middle value between those in the states in Figs. 9 and 10, a case where the input amount of the material has a middle value between those in the states in Figs. 9 and 10, a case where the material consumption amount has a middle value between those in the states in Figs. 9 and 10, and the like.

In the description of Fig. 9, the first replenishment position PH1 and the second replenishment position PH2 are respectively set in the turning route L1b following the end portion positions Z5 and Z7. However, the position setting unit 51G may also set the first replenishment position PH1 in the turning route L1b following the end portion position Z3 and set the second replenishment position PH2 in the turning route L1b following the end portion position Z5 or Z3. In the description of Fig. 10, the first replenishment position PH1 and the second replenishment position PH2 are respectively set in the turning route L1b following the end portion positions Z7 and Z5. However, the position setting unit 51G may also set the first replenishment position PH1 in the turning route L1b following the end portion position Z5 or Z3 and set the second replenishment position PH2 in the turning route L1b following the end portion position Z3. In the description of Fig. 11, the first replenishment position PH1 and the second replenishment position PH2 are set in the turning route L1b following the end portion position Z5. However, the position setting unit 51G may also set the first replenishment position PH1 and the second replenishment position PH2 in the turning route L1b following the end portion position Z3.

That is, the position setting unit 51G sets the first replenishment position PH1 and the second replenishment position PH2 in the turning route L1b arranged on the same side among a plurality of turning routes L1b. In this manner, by arranging the first replenishment position PH1 and the second replenishment position PH2 on the same sides of the turning routes L1b, replenishment work for the material and replacement work for the battery 6 can be easily performed. When the first replenishment position PH1 and the second replenishment position PH2 are set by the position setting unit 51G, the first replenishment position PH1 and the second replenishment position PH2 set by the position setting unit 51G are stored in the storage unit 53.

### <Automated Driving, Material Replenishment, and Battery Replacement>

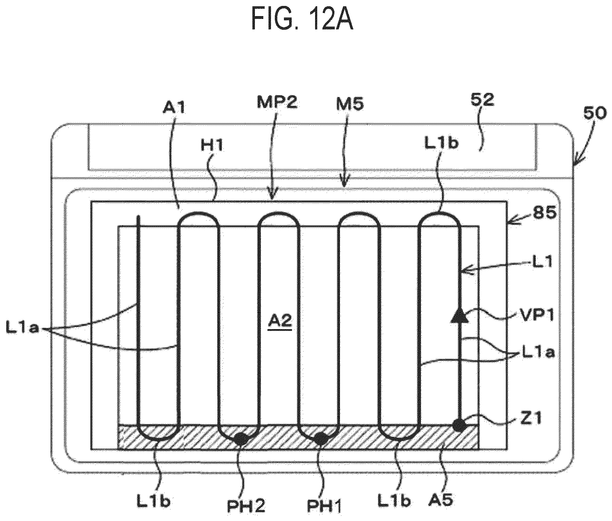

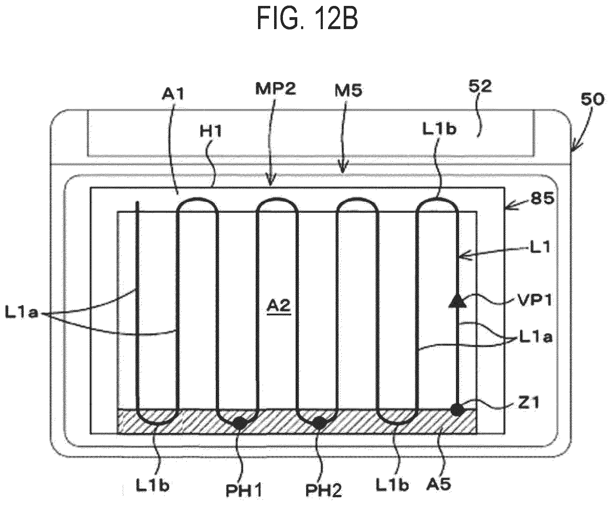

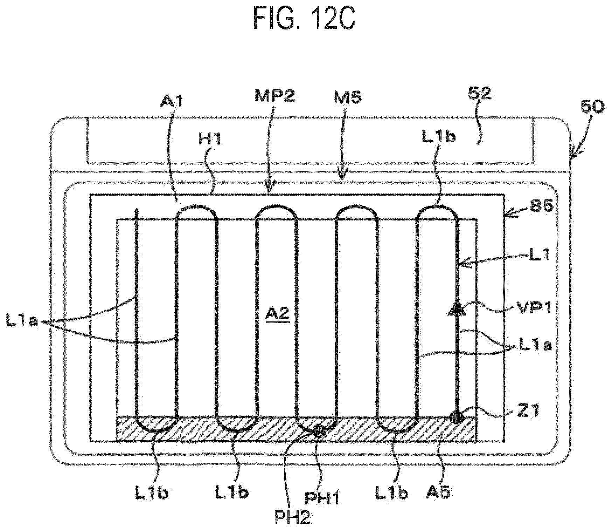

In a case of performing the automated driving, a driving screen M5 is displayed on the display unit 52 of the display device 50 as shown in Fig. 12. Displays on the display unit 52 in Figs. 12(a), 12(b), and 12(c) correspond to the states shown in Figs. 9, 10, and 11, respectively. For example, the work area A2, the replenishment area A5, the scheduled travel route L1 (the straight route L1a and the turning route L1b), and the current position (vehicle body position) VP1 of the tractor 1 (working device 2) are displayed on the driving screen M5. The work area A2, the replenishment area A5, the scheduled travel route L1, and the vehicle body position VP1 are displayed on the driving screen M5 of Fig. 12, but the contents are not limited.

Next, the automated driving, the material replenishment, and the replacement of the battery 6 will be described in detail. As shown in Fig. 1, the tractor 1 includes the control device 60. The control device 60 is a device that controls a traveling system, a work system, and the like in the tractor 1. A driving changeover switch 65 is connected to the control device 60. The driving changeover switch 65 is a switch that can be switched to be turned on and off, and can set the control device 60 to the automated driving mode when being turned on, and can set the control device 60 to a manual driving mode when being turned off.

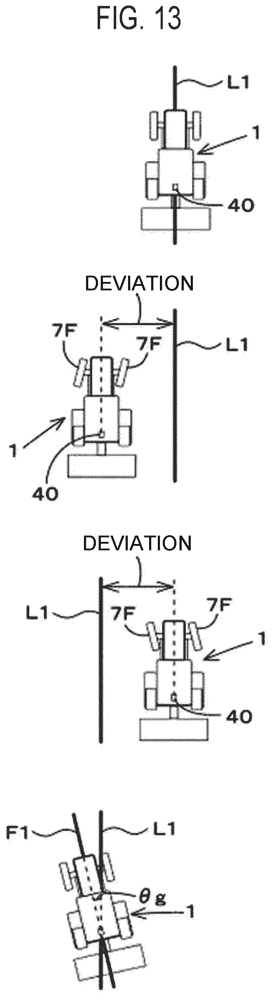

The control device 60 includes an automated driving control unit 63. The automated driving control unit 63 is configured by an electric/electronic circuit provided in the control device 60, a program stored in a CPU or the like, and the like. The automated driving control unit 63 controls the automated driving of the traveling vehicle body 3. The automated driving control unit 63 starts the automated driving in the automated driving mode. As shown in Fig. 13, in a case where a deviation between the vehicle body position and the scheduled travel route L1 is less than a threshold under the situation where the tractor 1 is performing the automated driving, the automated driving control unit 63 maintains a rotation angle of the steering shaft (rotation shaft) 31. In a case where the deviation between the vehicle body position and the scheduled travel route L1 is equal to or greater than the threshold and the tractor 1 is located on a left side of the scheduled travel route L1, the automated driving control unit 63 rotates the steering shaft 31 such that a steering direction of the tractor 1 is a right direction. In a case where the deviation between the vehicle body position and the scheduled travel route L1 is equal to or greater than the threshold and the tractor 1 is located on a right side of the scheduled travel route L1, the automated driving control unit 63 rotates the steering shaft 31 such that a steering direction of the tractor 1 is a left direction. In the above-described embodiment, the steering angle of the steering device 29 is changed based on the deviation between the vehicle body position and the scheduled travel route L1. However, in a case where an azimuth of the scheduled travel route L1 and an azimuth (vehicle body azimuth) of the tractor 1 (travel vehicle body 3) in a heading direction (traveling direction) are different from each other, that is, in a case where an angle of the vehicle body azimuth with respect to the scheduled travel route L1 is equal to or greater than a threshold, the automated driving control unit 63 may set the steering angle such that the angle becomes zero (a vehicle body azimuth F1 matches the azimuth of the scheduled travel route L1). Further, the automated driving control unit 63 may set the final steering angle in automatic steering based on a steering angle obtained based on the deviation (position deviation) and a steering angle obtained based on the azimuth (azimuth deviation). The setting of the steering angle in the automatic steering in the above-described embodiment is an example and is not limited.

In a case where the scheduled travel route L1 and the vehicle speed are associated with each other, the automated driving control unit 63 automatically changes a shift stage of the transmission device, the rotation speed of the prime mover, and the like such that the current vehicle speed of the tractor 1 matches the vehicle speed corresponding to the scheduled travel route L1.

In addition, the automated driving control unit 63 performs the ground work by the working device 2 on the straight route L1a, and temporarily stops the ground work by the working device 2 and turns on the turning route L1b, and resumes the ground work when entering the straight route L1a. As described above, the control device 60 can cause the tractor 1 (traveling vehicle body 3) to perform the automated driving.

As shown in Fig. 12, it is assumed that the tractor 1 travels along the scheduled travel route L1 from the end portion position Z1 by the automated driving. As shown in Fig. 12(a), an operation in a case where the first replenishment position PH1 is set before the second replenishment position PH2 will be described. First, when the current position VP1 of the tractor 1 reaches the turning route L1b corresponding to the set first replenishment position PH1, the tractor 1 (traveling vehicle body 3) stops traveling and the ground work by the working device 2. The working device 2 is replenished with the material in a state in which the tractor 1 is stopped at the first replenishment position PH1. In the present embodiment, the material such as a fertilizer or a pesticide is supplied to the container 2a. When the replenishment is completed, the tractor 1 turns on the turning route L1b while the ground work is stopped, moves toward the straight route L1a, and resumes the ground work when entering the straight route L1a.

When a predetermined operation is performed on the display device 50 when the working device 2 is replenished with the material at the first replenishment position PH1, a setting screen that includes the input amount input section 97 and is equivalent to the setting screen M3 is displayed as shown in Fig. 7, and the input amount Q2 of the material may be input. In this case, the input amount acquisition unit 51E acquires the input amount Q2 and the like input to the input amount input section 97, the material remaining amount computation unit 51F obtains the remaining amount Q3 of the material at the predetermined position by using the input amount Q2, the supply amount Q1, the work width W2, and the like, and the position setting unit 51G resets the first replenishment position PH1 after the current first replenishment position PH1.

Next, when the current position VP1 of the tractor 1 reaches the turning route L1b corresponding to the set second replenishment position PH2, the traveling of the tractor 1 (traveling vehicle body 3) and the ground work by the working device 2 are stopped again. The battery 6 is replaced while the tractor 1 is stopped at the second replenishment position PH2. When the replacement is completed, the tractor 1 turns on the turning route L1b while the ground work is stopped, moves toward the straight route L1a, and resumes the ground work when entering the straight route L1a.

As shown in Fig. 14, the battery 6 includes a battery pack and an electric unit (a relay, a fuse, or the like) inside a substantially rectangular parallelepiped casing. The battery pack includes a plurality of battery modules. The battery module includes a plurality of cells. The battery 6 configured as described above is a battery capable of charging and discharging electric energy, specifically, a lithium ion battery. The battery 6 is held by a holder 6a from the outside of the casing, and a grip portion 6b is provided at a front side end portion of the holder 6a. The battery mounting portion 11 of the vehicle body 3 includes a housing portion 11a that is a space capable of housing the entire battery 6, an opening 11b provided on a front side of the housing portion 11a in the vehicle width direction, and a flap type lid portion 11c capable of closing the opening 11b. Normally, in a state in which the battery 6 is housed in the housing portion 11a, the opening 11b is closed by the lid portion 11c, and electric power can be supplied from the battery 6 to the tractor 1.

In a case of replacing the battery 6, the opening 11b is exposed by opening the lid portion 11c. By pulling the holder 6a toward a front side while gripping the grip portion 6b of the battery 6, the battery 6 is taken out from the housing portion 11a while being slid toward the front side in the vehicle width direction. A back side end portion of the new battery 6 is inserted into the empty housing portion 11a through the opening 11b. Next, the holder 6a is pushed toward a back side while gripping the grip portion 6b of the new battery 6, and the battery 6 is slid toward the back side in the vehicle width direction. Then, after the entire new battery 6 is housed in the housing portion 11a, the opening 11b is closed by closing the lid portion 11c. As described above, the battery 6 is replaced. The configurations of the battery 6 and the battery mounting portion 11 are examples, and any configuration may be adopted as long as the battery 6 can be mounted on and separated from the battery mounting portion 11.

In the present embodiment, the battery 6 is replaced. However, instead, a package capable of storing the energy source may be replaced. As the package, for example, a hydrogen tank, a liquified petroleum gas (LPG) tank, or the like may be used. In a case where the hydrogen tank is loaded, for example, a fuel cell that generates electric power with hydrogen and oxygen in the air may be mounted on the tractor 1, and hydrogen from the tank may be supplied to the fuel cell. In a case where the LPG tank is loaded, for example, a generator that generates electric power by a gas engine may be mounted on the tractor 1, and gas from the tank may be supplied to the gas engine.

When the battery 6 is replaced at the second replenishment position PH2, the charge amount acquisition unit 51H acquires the charge amount P1 of the new battery 6, the battery remaining level computation unit 51I obtains the remaining level P3 of the battery 6 at the predetermined position by using the charge amount P1 and the like, and the position setting unit 51G resets the second replenishment position PH2 after the current second replenishment position PH2.

As shown in Fig. 10(b), an operation in a case where the first replenishment position PH1 is set after the second replenishment position PH2 will be described. First, when the current position VP1 of the tractor 1 reaches the turning route L1b corresponding to the set second replenishment position PH2, the tractor 1 (traveling vehicle body 3) stops traveling and the ground work by the working device 2. The battery 6 is replaced while the tractor 1 is stopped at the second replenishment position PH2. When the replacement is completed, the tractor 1 turns on the turning route L1b while the ground work is stopped, moves toward the straight route L1a, and resumes the ground work when entering the straight route L1a. In addition, the second replenishment position PH2 after the current second replenishment position PH2 is reset.

Next, when the current position VP1 of the tractor 1 reaches the turning route L1b corresponding to the set first replenishment position PH1, the traveling of the tractor 1 (traveling vehicle body 3) and the ground work by the working device 2 are stopped again. The working device 2 is replenished with the material in a state in which the tractor 1 is stopped at the first replenishment position PH1. When the replenishment is completed, the tractor 1 turns on the turning route L1b while the ground work is stopped, moves toward the straight route L1a, and resumes the ground work when entering the straight route L1a. In addition, the first replenishment position PH1 after the current first replenishment position PH1 is reset.

As shown in Fig. 10(c), an operation in a case where the first replenishment position PH1 and the second replenishment position PH2 are set at the same position will be described. When the current position VP1 of the tractor 1 reaches the turning route L1b corresponding to the set first replenishment position PH1 and second replenishment position PH2, the tractor 1 (traveling vehicle body 3) stops traveling and the ground work by the working device 2. The working device 2 is replenished with the material and the battery 6 is replaced in a state in which the tractor 1 is stopped at the first replenishment position PH1 and the second replenishment position PH2. When the replenishment and the replacement are completed, the tractor 1 turns on the turning route L1b while the ground work is stopped, moves toward the straight route L1a, and resumes the ground work when entering the straight route L1a. In addition, the first replenishment position PH1 and the second replenishment position PH2 after the current first replenishment position PH1 and the current second replenishment position PH2 are reset.

### <Summary>

As described above, the working machine 100 according to the embodiment of the present invention includes the tractor 1, the battery 6 that stores the energy source for driving the tractor 1, the working device 2 that is provided in the tractor 1 and performs the work by using the material, the route creation unit 51B that creates the scheduled travel route L1 of the tractor 1 in the work area A2 where the work using the material is performed by the working device 2, the area setting unit 51D that sets the replenishment area A5 in which the material replenishment and replacement of the battery 6 are performed outside the work area A2, and the position setting unit 51G that sets the first replenishment position PH1 which is a position for the material replenishment and the second replenishment position PH2 which is a position for the replacement of the battery 6 in the replenishment area A5 set by the area setting unit 51D. With this configuration, the first replenishment position PH1 can be set to a position where the tractor 1 can reach before the material is used up. Further, the second replenishment position PH2 can be set to a position where the tractor 1 can reach before the battery 6 is used up. Therefore, the working machine 100 can reach the first replenishment position PH1 before the material is used up, and the material replenishment can be performed at the first replenishment position PH1. Further, the working machine 100 can reach the second replenishment position PH2 before the battery 6 is used up, and the replacement of the battery 6 can be performed at the second replenishment position PH2. Therefore, material shortage and stop of the tractor 1 are suppressed in the work area A2, and deterioration of the working efficiency can be suppressed.

In the working machine 100 according to the embodiment, in particular, the route creation unit 51B creates the turning route L1b that passes through the replenishment area A5 from the work area A2 and returns to the work area A2 again, and the position setting unit 51G sets the first replenishment position PH1 and the second replenishment position PH2 in a portion corresponding to the turning route L1b in the replenishment area A5. With this configuration, the positions of the first replenishment position PH1 and the second replenishment position PH2 are set by effectively using the portion of the replenishment area A5 corresponding to the turning route L1b. Therefore, it is possible to reduce a time and effort to create an extra scheduled travel route L1 to set only the first replenishment position PH1 and the second replenishment position PH2.

In the working machine 100 according to the embodiment, in particular, the position setting unit 51G sets the first replenishment position PH1 and the second replenishment position PH2 on the turning routes L1b on the same side in a turning direction of the tractor 1 among the plurality of turning routes L1b. With this configuration, the replenishment material and the replacement battery 6 can be prepared in the vicinity of the turning routes L1b on the same side. Therefore, the material replenishment at the first replenishment position PH1 and the replacement of the battery 6 at the second replenishment position PH2 can be efficiently performed.

In the working machine 100 according to the embodiment, in particular, the position setting unit 51G sets the second replenishment position PH2 based on the remaining level P3 of the battery 6, and the working machine 100 includes the automated driving control unit 63 that performs the work by the working device 2 while causing the tractor 1 to perform the automated driving based on the scheduled travel route L1b, the automated driving control unit 63 moving the tractor 1 to the second replenishment position PH2 set by the position setting unit 51G. With this configuration, the tractor 1 can be automatically moved to the second replenishment position PH2 before the battery 6 is used up by the working machine 100. Therefore, it is possible to more reliably suppress the tractor 1 from stopping in the work area A2.

In the working machine 100 according to the embodiment, in particular, the position setting unit 51G sets the first replenishment position PH1 based on the remaining amount Q3 of the material in the working device 2, and the working machine 100 includes the automated driving control unit 63 that performs the work by the working device 2 while causing the tractor 1 to perform the automated driving based on the scheduled travel route L1b, the automated driving control unit 63 moving the tractor 1 to the first replenishment position PH1 set by the position setting unit 51G. With this configuration, the tractor 1 (and the working device 2) can be automatically moved to the first replenishment position PH1 before the material is used up by the working machine 100. Therefore, it is possible to more reliably suppress the material shortage in the work area A2.

In particular, the working machine 100 according to the embodiment includes the battery mounting portion 11 on which the battery 6 is mounted, and in a case where the energy source replenishment is performed at the second replenishment position PH2 set by the position setting unit 51G, the battery 6 mounted on the battery mounting portion 11 is separated, and the new battery 6 for replacing the separated battery 6 is mounted on the battery mounting portion 11. With this configuration, the new fully charged battery 6 is delivered toward the second replenishment position PH2 or is placed in advance in the vicinity of the replenishment area A5, whereby the battery replacement can be smoothly performed. Therefore, it is possible to improve overall efficiency in work including the energy source replenishment.

### [Modified Example 1: Movement to First Replenishment Position PH1 by Driving by Worker]

In the above-described embodiment, the automated driving control unit 63 causes the tractor 1 to perform the automated driving to move the tractor 1 to each of the first replenishment position PH1 and the second replenishment position PH2 set by the position setting unit 51G. Alternatively, for example, the tractor 1 may be moved to the first replenishment position PH1 set by the position setting unit 51G by the driving by the worker (driver) instead of the automated driving, and the automated driving control unit 63 may move the tractor 1 to the second replenishment position PH2 set by the position setting unit 51G by the automated driving.

In this case, for example, in a case where the remaining amount (theoretical remaining amount) Q3 of the material becomes equal to or smaller than a predetermined value (threshold) during the driving by the worker (driver), a notification that the remaining amount Q3 of the material is equal to or smaller than the predetermined value may be made for the driver by a buzzer or the like, or information indicating that the remaining amount Q3 of the material is small may be displayed on the screen of the display device 50.

With this configuration, for example, it is possible to move to the first replenishment position PH1 in a state in which the remaining amount of the material is sufficient, and it is possible to more reliably suppress the material shortage in the work area A2. Alternatively, for example, it is possible to move to the first replenishment position PH1 in a state in which the remaining amount of the material is minimized, thereby reducing the number of times the material replenishment is performed. That is, it is possible to move to the first replenishment position PH1 at the worker (driver)'s discretion according to the actual situation of the work.

### [Modified Example 2: Movement to Second Replenishment Position PH2 by Driving by Worker]

In the above-described embodiment, the automated driving control unit 63 causes the tractor 1 to perform the automated driving to move the tractor 1 to each of the first replenishment position PH1 and the second replenishment position PH2 set by the position setting unit 51G. Alternatively, for example, the automated driving control unit 63 may cause the tractor 1 to perform the automated driving to move to the first replenishment position PH1 set by the position setting unit 51G, and may cause the tractor 1 to move to the second replenishment position PH2 set by the position setting unit 51G by driving by the worker (driver) instead of the automated driving.

In this case, for example, in a case where the remaining level (theoretical remaining level) P3 of the battery 6 becomes equal to or lower than a predetermined value (threshold) during the driving by the worker (driver), a notification that the remaining level P3 of the battery 6 is equal to or lower than the predetermined value may be made for the driver by a buzzer or the like, or information indicating that the remaining level P3 of the battery 6 is low may be displayed on the screen of the display device 50.

With this configuration, for example, it is possible to move to the second replenishment position PH2 in a state in which the remaining level of the battery 6 is sufficient, and it is possible to more reliably suppress battery exhaustion in the work area A2. Alternatively, for example, it is possible to move to the second replenishment position PH2 in a state in which the remaining level of the battery 6 is minimized, thereby reducing the number of times the replacement of the battery is performed. That is, it is possible to move to the second replenishment position PH2 at the worker (driver)'s discretion according to the actual situation of the work.

It should be understood that the embodiments disclosed herein are illustrative in all respects and not restrictive. The scope of the present invention is indicated not by the above description but by the claims, and it is intended that meanings equivalent to the claims and all modifications within the scope are included.

### REFERENCE SIGNS LIST

- 1: Traveling vehicle (tractor)
- 2: Working device
- 3: Traveling vehicle body
- 6: Battery
- 11: Battery mounting portion
- 29: Steering device
- 40: Positioning device
- 41: Reception device
- 42: Inertial measurement unit
- 50: Display device
- 51: Control unit
- 51B: Route creation unit
- 51D: Area setting unit
- 51E: Input amount acquisition unit
- 51F: Material remaining amount computation unit
- 51G: Position setting unit
- 51H: Charge amount acquisition unit
- 51I: Battery remaining level computation unit
- 60: Control device
- 63: Automated traveling control unit
- 65: Driving changeover switch
- 100: Working machine
- A1: Turning area
- A2: Work area
- A2: Work area
- A3: Unit work section
- A5: Replenishment area
- L1: Scheduled travel route
- L1a: Straight route
- L1b: Turning route
- N1: In-vehicle network
- P1: Charge amount
- P2: Battery consumption amount
- P3: Remaining level of battery
- PH1: First replenishment position
- PH2: Second replenishment position
- Q1: Supply amount of material
- Q2: Input amount of material
- Q3: Remaining amount of material
- Q4: Material consumption amount
- W2: Work width
- Z1 to Z8: End portion position

## Claims

1. A working machine comprising:
a traveling vehicle;
a storing device that stores an energy source for driving the traveling vehicle;
a working device provided in the traveling vehicle and that performs work by using a material;
a route creation unit that creates a scheduled travel route of the traveling vehicle in a work area where the working device performs the work by using the material;
an area setting unit that sets a replenishment area in which replenishment with the material and replenishment with the energy source are performed outside the work area; and
a position setting unit that sets a first replenishment position, which is a position for the replenishment with the material, and a second replenishment position, which is a position for the replenishment with the energy source, in the replenishment area set by the area setting unit.

2. The working machine according to claim 1, wherein
the route creation unit creates a turning route that passes through the replenishment area from the work area, and returns to the work area again, and
the position setting unit sets the first replenishment position and the second replenishment position in a portion corresponding to the turning route in the replenishment area.

3. The working machine according to claim 2, wherein
the position setting unit sets the first replenishment position and the second replenishment position on turning routes on a same side in a turning direction of the traveling vehicle among a plurality of the turning routes.

4. The working machine according to any one of claims 1 to 3, wherein
the position setting unit sets the second replenishment position based on a remaining level of the energy source in the storing device, and
the working machine comprises an automated driving control unit that performs the work by the working device while causing the traveling vehicle to perform automated driving based on the scheduled travel route, the automated driving control unit moving the traveling vehicle to the second replenishment position set by the position setting unit.

5. The working machine according to any one of claims 1 to 3, wherein
the position setting unit sets the first replenishment position based on a remaining amount of the material in the working device, and
the working machine comprises an automated driving control unit that performs the work by the working device while causing the traveling vehicle to perform automated driving based on the scheduled travel route, the automated driving control unit moving the traveling vehicle to the first replenishment position set by the position setting unit.

6. The working machine according to any one of claims 1 to 3, comprising:
a storing device mounting portion on which the storing device is mounted, wherein
in a case where the replenishment with the energy source is performed at the second replenishment position set by the position setting unit, the storing device mounted on the storing device mounting portion is separated, and a new storing device for replacing the separated storing device is mounted on the storing device mounting portion.

7. The working machine according to claim 4, wherein
the position setting unit sets the first replenishment position based on a remaining amount of the material in the working device, and
the working machine comprises an automated driving control unit that performs the work by the working device while causing the traveling vehicle to perform automated driving based on the scheduled travel route, the automated driving control unit moving the traveling vehicle to the first replenishment position set by the position setting unit.

8. The working machine according to claim 4, comprising
a storing device mounting portion on which the storing device is mounted, wherein
in a case where the replenishment with the energy source is performed at the second replenishment position set by the position setting unit, the storing device mounted on the storing device mounting portion is separated, and a new storing device for replacing the separated storing device is mounted on the storing device mounting portion.

9. The working machine according to claim 5, comprising:
a storing device mounting portion on which the storing device is mounted, wherein
in a case where the replenishment with the energy source is performed at the second replenishment position set by the position setting unit, the storing device mounted on the storing device mounting portion is separated, and a new storing device for replacing the separated storing device is mounted on the storing device mounting portion.
